# EUROPEAN PATENT APPLICATION

(11) **EP 2 450 219 A1**
(43) Date of publication of application: **09.05.2012**
(21) Application number: 10189831.0
(22) Date of filing: 03.11.2010
(51) Int. Cl.: B60K 31/00, B60K 31/18, G01C 21/26, B60W 10/18, B60W 10/04, G08G 1/0967

(54) **A GPS-based vehicle speed stabilization system**

(71) Applicant: Tofas Turk Otomobil Fabrikasi Anonim Sirketi, 16369 Bursa (TR)
(72) Inventor: Alpan, Ozgur, 16369 Bursa (TR)
(74) Representative: Dericioglu, Ekin

(57) **Abstract**

The present invention relates to a vehicle speed stabilization system (1) comprising: at least one GPS receiver (2) which receives the signals coming from the GPS satellites (G); at least one body control module (3) which receives the latitude - longitude information of the location at which the vehicle (T) is present, coming from the GPS receiver (2), and converts these information into a format that will be understood by the electronic units in the vehicle (T); at least one engine control unit (4) which calculates and controls the maximum amount of speed that can be reached by the vehicle (T) at its location by analyzing the latitude - longitude information with the location/speed information maps loaded into it previously; at least one warning unit (5) which warns the driver visually and vocally.

## Description

### Field of the Invention

The present invention relates to a vehicle speed stabilization system which limits speeds of vehicles using Global Positioning System (GPS).

### Background of the Invention

Nowadays, speeds of vehicles are not be limited by units in the vehicle independently of the user. In currently used systems, units in the vehicle warn the driver vocally when the vehicle reaches specified speed value or this value is exceeded.

The fact that there is no vehicle speed limitation independently of the user may lead to fatal accidents by enabling the vehicle speed to be controlled only by the driver.

The Chinese patent document no. CN101240750 discloses an intelligent controller which limits vehicle speed with GPS location function. The invention disclosed in the said document comprises a GPS positioning circuit, a control circuit, a speed sensor and an accelerometer control mechanism. The GPS positioning circuit includes a GPS module with GPS antennae. The control circuit includes a microprocessor and a speed limiting data-base. The speed sensor and the accelerometer are connected with the automobile speed tachometer of the device. The technology used is combination of the GPS technology and the vehicle speed limiting technology. By means of this system, the vehicle speed is also changed in road change.

The United States patent document no. US6515596 discloses a system which shows speed limit for vehicles. In the system, position of the vehicle is determined using a GPS receiver and speed limit and other information are reached from the database using this position. The result is reported to the driver. With this technique, the actual speed and the posted speed limit can be compared and a warning is sent to the driver without exceeding the speed limit as well.

The United States patent document no. US6085137 discloses automatic control of vehicle by utilizing road information stored in a navigation system unit such as GPS. In response to the road information stored in the memory, upper-limit of the shiftable gear ratio (gear change) is determined, thereby gear change occurs only within a restricted range. And this provides speed control. Actual downshift is carried out by the driver according to initiation of a decelerating operation (by release of the accelerator pedal). By this means, unnecessary upshift is prevented.

### Summary of the Invention

The objective of the present invention is to realize a GPS-based vehicle speed stabilization system wherein vehicle speed is limited by determining the location of the vehicle, up to the speed information value set by traffic rules for that location.

### Detailed Description of the Invention

A GPS-based vehicle speed stabilization system realized to fulfill the objective of the present invention is illustrated in the accompanying figure, in which:

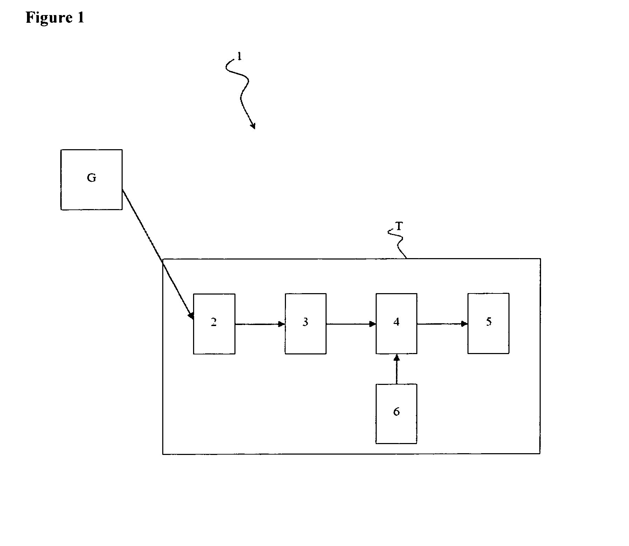

Figure 1 is the schematic view of the preferred embodiment of the inventive GPS-based vehicle speed stabilization system.

The components illustrated in the figure are individually numbered where the numbers refer to the following:
1. Vehicle speed stabilization system
2. GPS receiver
3. Body control module (BCM),
4. Engine control unit (ECU)
5. Warning unit
6. Button
T: Vehicle
G. GPS satellite

A vehicle speed stabilization system ( 1 ) which prevents exceeding the predefined speed value, by determining the location of vehicles (T), for that location; comprises (Figure 1):
- at least one GPS receiver (2) which receives the signals coming from the GPS satellites (G), finds latitude - longitude information at which the vehicle (T) is present according to these signals and transmits these information to the controller area network (CAN) of the vehicle (T);
- at least one body control module (3) which is located in the controller area network of the vehicle (T), receives the latitude - longitude information of the location at which the vehicle (T) is present, coming from the GPS receiver (2), and converts these information into a format that will be understood by the electronic units in the vehicle (T);
- at least one engine control unit (4) which receives the latitude - longitude information coming from the body control module (3) and, calculates and controls the maximum amount of speed that can be reached by the vehicle (T) at its location within the framework of traffic rules by analyzing these information with the location/speed information maps loaded into it previously.

The inventive vehicle speed stabilization system (1) firstly finds the location of the vehicle (T) on the world by making use of GPS system. The vehicle speed stabilization system (1) needs at least one GPS receiver (2) for this. The said GPS receiver (2) determines the location of the vehicle (T) according to signals coming from the GPS satellites (G) and transmits the location information of the vehicle (T) to the body control module (3).

The body control module (3) provides control of electronic devices in the controller area network of the vehicle (T) and organizes operations of these devices. The body control module (3) transmits the information coming from the GPS receiver (2) to the engine control unit (4) continuously.

The engine control unit (4) calculates the maximum amount of speed that can be reached by the vehicle (T) at its location by analyzing the latitude - longitude information transmitted to itself with the location/speed information maps inserted into it previously. The engine control unit (4) controls the operation of the engine after it calculates the maximum amount of speed that can be reached by the vehicle (T) at its location from the defined map in its memory and prevents the vehicle (T) from exceeding the said amount of speed. The engine control unit (4) calculates the maximum amount of speed that can be reached by the vehicle (T) at its location from the defined map in its memory and then accepts this amount of speed as maximum reference speed. This reference speed is an input for torque control management inside the engine control unit (4) software, and software inside the engine control unit (4) calculates equal torque to reach this reference maximum speed and it calculates/controls engine actuators to adjust required fuel, air etc... quantity to obtain reference torque which is related with requested speed and finally produced values of these quantities by engine driven from engine controller, produce speed control of engine consequently also vehicle as requested input speed. Lastly, the engine control unit (4) limits the engine speed at the speed corresponding the maximum reference speed, without asking the driver. Thus, it is ensured that both the vehicle (T) driver obeys traffic rules and possible traffic accidents are avoided.

In the preferred embodiment of the invention, at least one warning unit (5) is used in order to warn the driver in the vehicle (T) when the vehicle (T) driver wants to exceed the maximum reference amount of speed calculated by the control unit (4). The said warning unit (5) warns the driver visually and/or vocally and it is preferably located on the instrument panel of the vehicle (T). Thus, the driver finds out why the vehicle (T) does not speed up.

In an embodiment of the invention, there is at least one button (6) which is connected to the engine control unit (4) and which enables the vehicle (T) driver to start and stop the vehicle speed stabilization process by means of the engine control unit (4). In cases where it is needed to increase the vehicle (T) speed in order to escape from a possible accident, the driver can close the vehicle speed stabilization system (1) by means of the button (6) and then reactivate the system (1) using the same button (6) again if s/he wants.

In the inventive vehicle speed stabilization system (1), the vehicle (T) speed is limited up to the location/speed information value set by traffic rules for that location by determining the location of the vehicle (T) and possible traffic accidents are avoided.

Within the scope of these basic concepts, it is possible to develop various embodiments of the inventive GPS-based vehicle speed stabilization system (1). The invention can not be limited to the examples described herein; it is essentially according to the claims.

## Claims

1. A vehicle speed stabilization system (1) which prevents exceeding the predefined speed value, by determining the location of vehicles (T), for that location **characterized by**:
- at least one GPS receiver (2) which receives the signals coming from the GPS satellites (G), finds latitude - longitude information at which the vehicle (T) is present on the world according to these signals and transmits these information to the controller area network (CAN) of the vehicle (T);
- at least one body control module (3) which is located in the controller area network of the vehicle (T), receives the latitude - longitude information of the location at which the vehicle (T) is present, coming from the GPS receiver (2), and converts these information into a format that will be understood by the electronic units in the vehicle (T);
- at least one engine control unit (4) which receives the latitude - longitude information coming from the body control module (3) and, calculates the maximum amounts of speed that can be reached by the vehicle (T) at its location within the framework of traffic rules by analyzing these information with the speed information maps loaded into it previously.

2. A vehicle speed stabilization system (1) according to Claim 1, **characterized by** the engine control unit (4) which calculates the maximum amount of speed that can be reached by the vehicle (T) at its location from the defined map in its memory and then accepts this amount of speed as maximum reference speed controls the engine speed with software inside itself in order to prevent the current speed of the vehicle (T) from exceeding the maximum reference speed and lastly limits the engine speed at the speed corresponding the maximum reference speed, without asking the driver and thus ensures that both the vehicle (T) driver obeys traffic rules and possible traffic accidents are avoided.

3. A vehicle speed stabilization system (1) according to Claim 1 or Claim 2, **characterized by** at least one warning unit (5) which is used in order to warn the driver when the vehicle (T) driver wants to exceed the maximum reference amount of speed calculated by the control unit (4).

4. A vehicle speed stabilization system (1) according to Claim 2, **characterized by** at least one warning unit (5) which warns the driver visually.

5. A vehicle speed stabilization system (1) according to Claim 3 or Claim 4, **characterized by** at least one warning unit (5) which warns the driver vocally.

6. A vehicle speed stabilization system (1) according any of Claim 3 to Claim 5, **characterized by** at least one warning unit (5) which is located on the instrument panel of the vehicle (T).

7. A vehicle speed stabilization system (1) according to any of the preceding claims, **characterized by** at least one vehicle speed stabilization system (6) which is connected to the engine control unit (4) and which enables the vehicle (T) driver to start and stop the vehicle speed stabilization process by means of the engine control unit (4).

## Amended claims

### Amended claims in accordance with Rule 137(2) EPC.

**1.** A vehicle speed stabilization system (1) which prevents exceeding the predefined speed value, by determining the location of vehicles (T), for that location **comprising:**
- at least one GPS receiver (2) which receives the signals coming from the GPS satellites (G), determines latitude - longitude information at which the vehicle (T) is present on the world according to these signals and transmits these information to the controller area network (CAN) of the vehicle (T);
- at least one warning unit (5) which is used in order to warn the driver visually and vocally when the vehicle (T) driver wants to exceed the maximum reference speed calculated by the control unit (4) and which is located on the instrument panel of the vehicle (T);
- at least one button (6) which is connected to the engine control unit (4) and which enables the vehicle (T) driver to start and stop the vehicle speed stabilization function by means of the engine control unit (4), and **characterized by**
- at least one body control module (3) which is located in the controller area network (CAN) of the vehicle (T), receives the latitude - longitude information of the location at which the vehicle (T) is present, coming from the GPS receiver (2), and converts these information into a format that is compatible with the electronic units in the vehicle (T);
- at least one engine control unit (4) which receives the latitude - longitude information coming from the body control module (3) and, determines the maximum speed that can be reached by the vehicle (T) by calculating at its location within the framework of traffic rules by analyzing these information with the speed information maps loaded into it previously.

**2.** A vehicle speed stabilization system (1) according to Claim 1, **characterized by** the engine control unit (4) which analyzes the maximum speed that can be reached by the vehicle (T) at its location by using the defined map in its memory and then accepts this speed as maximum reference speed, controls the engine speed in order to prevent the current speed of the vehicle (T) from exceeding the maximum reference speed depending also on the gear ratio and lastly limits the engine speed such that it will be at the speed corresponding the maximum reference speed, without asking the driver in order to ensure that both the vehicle (T) driver obeys traffic rules and possible traffic accidents are avoided.
